# EUROPEAN PATENT SPECIFICATION

(11) **EP 3 176 851 B1**
(45) Date of publication and mention of the grant of the patent: **02.01.2019**
(21) Application number: 16200447.7
(22) Date of filing: 24.11.2016
(51) Int. Cl.: H01M 2/10, H01M 2/20, H01M 10/6561, H01M 10/613, H01M 10/6551, B64D 27/24, B64D 33/08, H01M 10/625, H01M 10/658, H01M 10/6562, H01M 10/02, B64D 41/00

(54) **ELECTRICAL ENERGY STORAGE DEVICE**
ELEKTRISCHE ENERGIESPEICHERVORRICHTUNG
DISPOSITIF DE STOCKAGE D'ÉNERGIE ÉLECTRIQUE

(30) Priority: 03.12.2015 DE 102015121107
(43) Date of publication of application: 07.06.2017
(73) Proprietor: Airbus Defence and Space GmbH, 82024 Taufkirchen (DE)
(72) Inventor: Schuhmann, Moritz, 80469 Munich (DE); Friedl, Stephan, 83707 Bad Wiessee (DE); Jänker, Peter, 85521 Ottobrunn (DE)
(74) Representative: Kastel, Stefan

(56) References cited:
- DE-A1-102008 059 972
- DE-A1-102011 081 537
- DE-U1-202005 010 708
- JP-A- 2002 100 332
- US-A1- 2011 104 545
- US-A1- 2011 305 930
- US-A1- 2014 212 695
- US-A1- 2014 242 435
- US-A1- 2015 140 369
- US-A1- 2015 221 914
- US-B1- 8 920 955

## Description

The invention relates to an electrical energy storage device having a plurality of electrochemical energy storage cells for collecting, supplying and storing electrical energy. The electrochemical energy storage cells each have a first electrical terminal and a second electrical terminal. The invention further relates to a vehicle, in particular an aircraft, comprising an electromotive drive and at least one electrical energy storage device.

Such energy storage devices are known, for example, from DE 10 2013 015 422 A1, DE 10 2013 214 617 A1 and DE 10 2012 217 590 A1.

Electrochemical energy storage cells used in such energy storage devices can have an elongate shape. Such elongate energy storage cells are usually connected in series in unlike orientation in order to contact the cell head (positive pole) of a cell with the cell bottom (negative pole) of the following cell. In this case, changes in direction of the cell orientation in a series-connected subset of cells cannot be avoided, which means an increased spatial and electrical complexity. This requires repositioning or division and a reworking of the workpiece during fabrication as well as increased effort in design in order to regulate the temperature of all cells homogenously in operation.

US 8 920 955 B1 discloses a battery module with high thermal conductivity and an assembly method therefore.

US 2011/0104545 A1 discloses a battery comprising a temperature control unit that is configured as a cooling plate.

US 2011/0305930 A1 discloses a battery group including battery rows consequently disposed adjacent to each other and a frame for surrounding the battery group. The frame includes ribs for holding the batteries.

US 2014/0242435 A1 discloses a rechargeable battery comprising a plurality of individual sealed battery cells and dielectric separators between opposing surfaces of the battery cells. The separators are made of a fiber composite.

US 2015/0221914 A1 discloses a battery housing having a body and a lid mateable with the body. The body and the lid, when mated, provide a chamber dimensioned to hold batteries. At least a portion of the body and/or the lid comprises an intumescent flame retardant material which drives, during expansion, gases out of the chamber via a venting passage.

DE 10 2011 081 537 A1 discloses a battery system and a system for controlling temperature of battery cells. The system has a passage for a cooling or heating fluid. Heat exchange elements extend into the passage.

US 2015/0140369 A1 discloses a battery module comprising a case housing a plurality of cells. The case is divided by a circuit board provided at the same side of the cells into a housing space housing the cells and an exhaust duct for releasing gas from the vents to outside of the case.

US 2014/0212695 A1 discloses a system and a method for connecting batteries of a high voltage battery pack. A tuned flexible printed circuit board is individually coupled to each electrode of each cell of a matrix of cells of the battery pack.

DE 10 2008 059 972 A1 discloses a battery having a plurality of single cells connected in series and/or parallel including a cooling plate an a pole side. The cells are accommodated and supported by a plurality of supporting elements made from metal connected to a body. The connections between the supporting elements can be made from foam material.

DE 20 2005 010 708 U1 discloses a cell casing for a cell of a battery whose casing has at least partially a foam structure.

JP 2002-100332 A discloses a battery cell retainer. In order to save man power during assembly of the battery, the cells are hold on all sides within closed spaces of a retaining main body that can be made from polyurethane foam.

The invention is based on the object of developing an electrical energy storage device of the type mentioned in the introduction in such a way that its manufacture is simplified and its reliability is improved, in particular in order to improve its suitability for use in vehicles. Furthermore, the invention is based on the object of providing a vehicle of the type mentioned in the introduction with an improved electrical energy storage device.

As a solution, an electrical energy storage device according to patent claim 1 is proposed.

Advantageous embodiments form the subject-matter of the dependent claims.

A method of manufacturing the electrical storage device is subject-matter of claim 11.

The energy storage device has a plurality of electrochemical energy storage cells for collecting, supplying and storing electrical energy, each of which has a first electrical terminal and a second electrical terminal, and a contacting device for contacting the first and second electrical terminals of the energy storage cells, wherein the contacting device has a multi-layered structure and has at least one insulation layer and a conductor layer.

In particular, such an electrical energy storage device is advantageous in that the cells can be assembled into a module with only a single method step.

The energy storage cells have a bottom side for heat dissipation and a head side, wherein the first and second terminals can be contacted in the region of the head side. It is thus possible to configure the contacting device in a relatively simple manner. Furthermore, the cooling system and the contacting of the cells can be spatially separated from each other.

The energy storage cells are disposed in such a way that the bottom sides are in each case disposed adjacent to bottom sides of other energy storage cells, and the head sides are in each case disposed adjacent to head sides of other energy storage cells. Thus, the contacting device, the heat dissipation and the assembly can be made even simpler.

The energy storage cells may have a surface area enlarging device for enlarging a contact surface between the energy storage cell and a temperature-regulating fluid. Because of the enlarged contact surface, the heat transfer between the energy storage cell and the temperature-regulating fluid is improved, so that the energy storage cell can be cooled and/or heated more easily.

Advantageously, the surface area enlarging device can be connected to the bottom side. In this case, the surface area enlarging device is disposed at a distance from the contacting device and is therefore incapable of being in the way of the latter.

Furthermore, a body for accommodating and positioning the energy storage cells is provided, which has openings for accommodating energy storage cells. By means of such a body, the energy storage cells can be orientated, spaced apart and/or prepared for the assembly of the energy storage device. Furthermore, the body provides the energy storage device with additional stability. If the body is formed from a flame-retardant material, the safety of the energy storage device can also be improved by its use.

A temperature-regulating channel for accommodating a temperature-regulating fluid for heat removal and supply is disposed in the region of the bottom sides of the energy storage cells. Thus, a separation of the electrical and the thermal connection is possible by means of an arrangement on, in each case, one side of the cells. Furthermore, the safety of the energy storage device can be improved by providing a venting channel for possible gas release in the case of failure of energy storage cells. The temperature-regulating channel can form this venting channel at the same time.

The contacting device can have a circuit board for unilaterally contacting the energy storage cells. This simplifies the design and assembly of the energy storage device because the circuit board only has to be placed on the energy storage cells for contacting. Furthermore, such a circuit board is a standard industrial product and thus easily available.

The circuit board can have a first conductor layer for connecting first terminals of several energy storage cells and a second conductor layer for connecting second terminals of the several energy storage cells and an insulation layer between the first and second conductor layers. Thus, a safe electrical separation of the terminals of the energy storage cells is provided.

The insulation layer of the circuit board can have at least one through hole each for at least one of the terminals of each energy storage cell to be connected.

The plurality of energy storage cells can be disposed in an array with several rows and several lines.

In another embodiment, several energy storage cells can be series-connected by means of the contacting device to form an energy storage cell group. Furthermore, several energy storage cell groups can be connected in parallel by means of the contacting device. Thus, energy storage devices with different, in particular higher, nominal voltages and capacitances can be formed. The connection by means of the contacting device simplifies the design of the energy storage device.

The object is also achieved by a vehicle, in particular an aircraft, comprising an electromotive drive and at least one electrical energy storage device, wherein the electrical energy storage device is configured according to any one of the patent claims 1 to 9.

Such a vehicle has an improved reliability and a simplified structure.

Embodiments of the invention will be explained in more detail below with reference to the attached drawings. In the drawings:
Fig. 1 shows a schematic side view of the structure of an embodiment of the energy storage device;
Fig. 2 shows a schematic side view of the structure of an embodiment of the energy storage device during assembly;
Fig. 3 shows a three-dimensional view of a body for an energy storage device;
Fig. 4 shows a sectional view through an energy storage cell;
Fig. 5 shows discharge curves of an energy storage device;
Fig. 6 shows a schematic sectional view through an electrical energy storage device;
Fig. 7 shows a schematic top view of the electrical energy storage device of Fig. 6;
Fig. 8 shows a schematic top view of another embodiment of the energy storage apparatus as in Fig. 7;

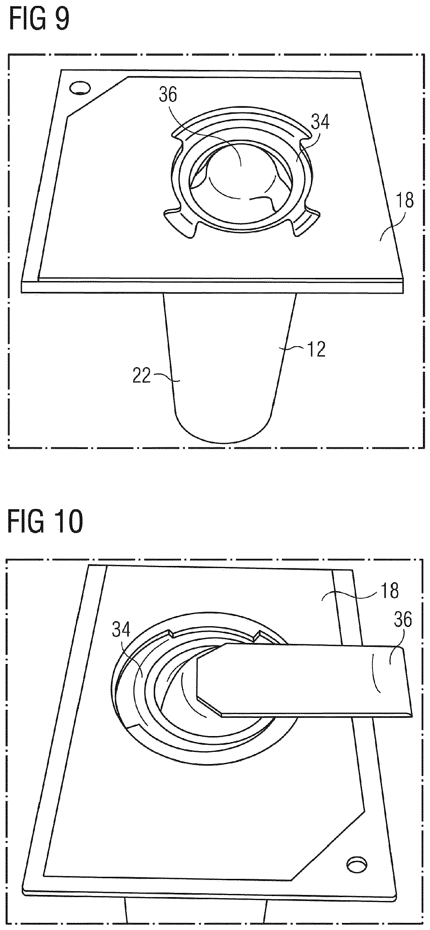

Fig. 9 shows a photograph of a section of an embodiment of a contacting device;
Fig. 10 shows a photograph of a section of another embodiment of a contacting device;
Fig. 11 shows discharge curves of an energy storage device; and
Fig. 12 shows a sectional view through an aircraft with an embodiment of the electrical energy storage device.

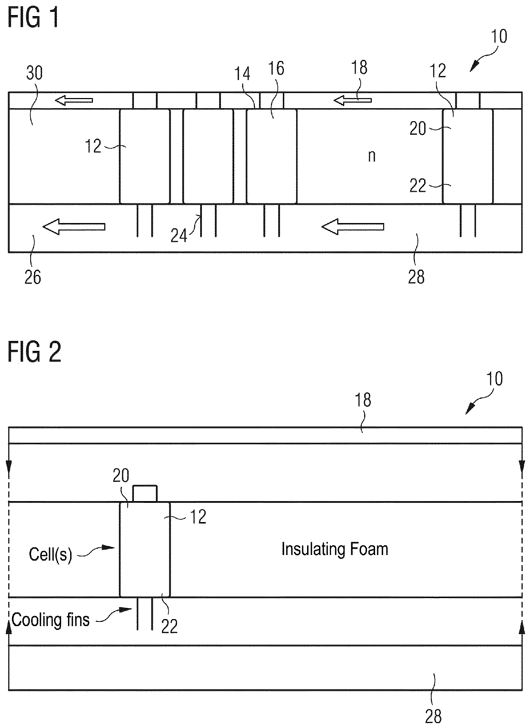

Fig. 1 shows an electrical energy storage device 10 having a plurality of electrochemical energy storage cells 12 for collecting, supplying and storing electrical energy. The energy storage cells 12 each have a first electrical terminal 14 and a second electrical terminal 16. The terminals 14, 16 can be contacted in the region of a head side 20.

A contacting device in the form of, for example, a circuit board 18, which is placed on the head sides 20 of the energy storage cells 12, is provided for contacting the terminals 14, 16.

In the region of bottom sides 22 of the energy storage cells 12, surface area enlarging devices are disposed, in the present embodiment fins 24, which are, for example, each welded to a bottom side 22. For example, the fins 24 can be configured as simple metal tabs and protrude into a temperature-regulating fluid 26 routed past the fins 24 in a temperature-regulating channel 28. Due to the additional surface provided by the fins 24, the heat transfer between the bottom side 22 and the temperature-regulating fluid 26 is improved.

The energy storage cells 12 are, for example, embedded in a body 30. For this purpose, openings into which the energy storage cells 12 can be inserted are provided in the body 30. The body 30 is made of insulating foam.

By way of example, Fig. 2 shows a method for constructing the energy storage device 10. In a first step, the energy storage cells 12 are inserted into the body 30. In another step, the circuit board 18 is placed in the region of the head sides 20 onto the energy storage cells 12. In yet another step, the temperature-regulating channel 28 is disposed in the region of the bottom sides 22. Additional steps of the method are also conceivable. For example, a further step could consist of providing the body 30 with openings into which the energy storage cells 12 can be inserted. Furthermore, another step could consist of connecting fins 24 to bottom sides 22, for example by welding.

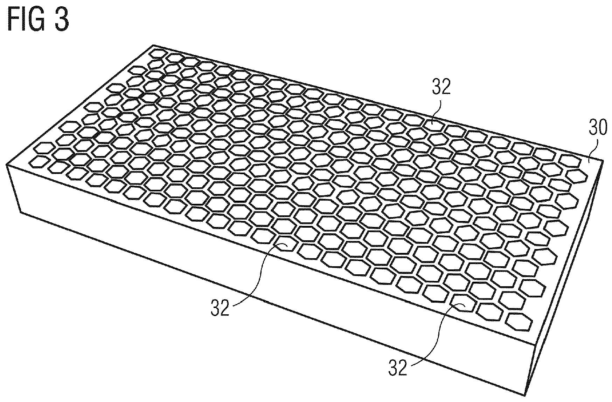

The body 30 shown by way of example in Fig. 3 has openings 32 for accommodating energy storage cells 12. The openings 32 can be introduced into the body 30 by drilling in a method step, for example.

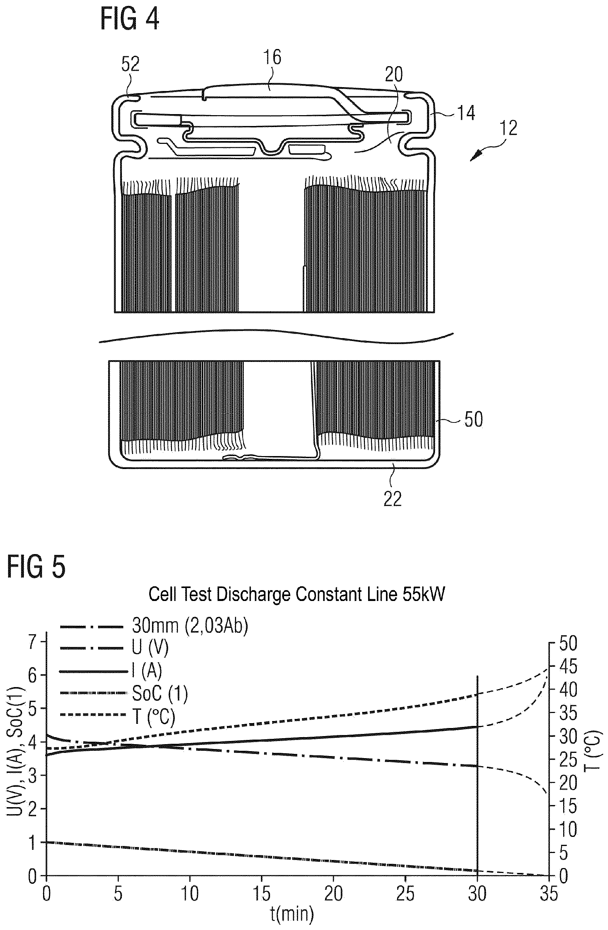

The energy storage cells 12 can be formed by round cells, for example, as they are shown in Fig. 4.

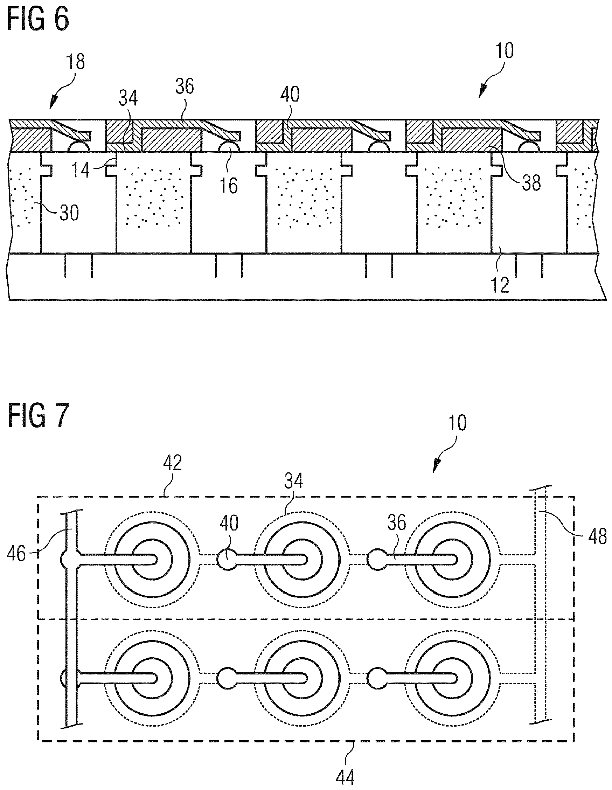

An exemplary configuration of a circuit board 18 is shown in Fig. 6. The circuit board 18 has a first conductor layer 34 and a second conductor layer 36. The conductor layers 34, 36 are disposed on opposite sides of an insulation layer 38. The conductor layers 34, 36 can be embedded into the insulation layer 38 as shown in Fig. 6, as well as configured to abut against the outside of the insulation layer 38.

In order to series-connect the energy storage cells 12 and thus form an energy storage cell group, the first conductor layers 34 are each in contact with a first electrical terminal 14 of the energy storage cells 12. The second conductor layers 36 are each in contact with a second electrical terminal 16 of the energy storage cells 12. The first conductor layers 34 and the second conductor layers 36 are connected by means of a via 40 that penetrates the insulation layer 38.

Fig. 7 shows a top view of a first energy storage cell group 42 formed in this way and a second energy storage cell group 44. The energy storage cells 12 are series-connected within each of the energy storage cell groups 42, 44. In contrast, the energy storage cell groups 42, 44 are connected in parallel by means of lines 46, 48.

The energy storage cell groups 42, 44 can have any number of series-connected energy storage cells 12. The number of energy storage cells 12 series-connected in each of the energy storage cell groups 42, 44 is dependent on the case of application of the energy storage device 10. Frequently, 12 energy storage cells 12 are connected in series.

The number of the energy storage cell groups 42, 44 used is also dependent upon the specific case of application. In particular, the number of the energy storage cell groups 42, 44 may be between 1 and 50, for example 22.

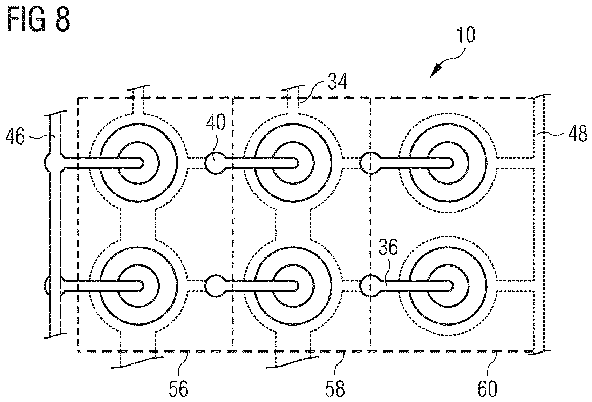

As shown in Fig. 8, it may be provided that a plurality of energy storage cells is in each case directly connected in parallel and that energy storage cell groups 56, 58, 60 are formed thereby. In this case, the energy storage cell groups 56, 58, 60 are connected in series.

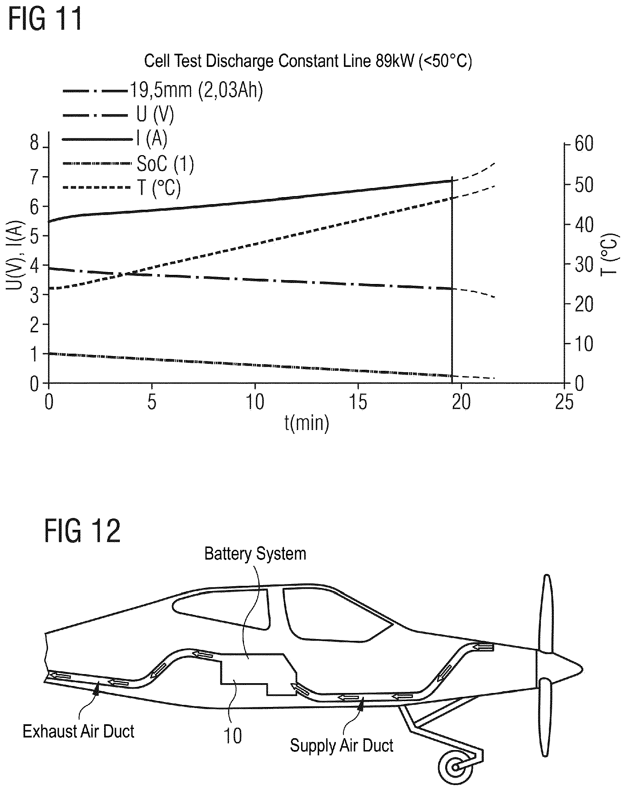

The energy storage device 10 can be used in an aircraft, for example, as shown in Fig. 12.

The energy storage device 10 according to the invention offers an electrical connection and a thermal link of energy storage cells 12, in particular round battery cells, to form a battery module that has little extra weight, a high safety level and is simple to manufacture. The thermal integration relates both to the temperature regulation as well as to the insulation of a failure (thermal runaway) in an individual cell and the spread to other cells. The effort for cooling is small and takes place only via one side of a layer of cells 12. That is why the bottoms of the cylindrical cells 12 are disposed on one and the same side.

The circuit board 18 used as a central element is an industrial standard product and as such is available without any problems. The electrical and thermal connection on one side of the cells in each case is separate and a venting channel for a possible gas release (in the case of failure) is integrated.

The thermal connection of only one side of the energy storage cell 12 permits more flexible cooling system geometries.

In such energy storage devices 10, the sandwich and cooling system design is more stable, lighter and safer than conventional designs.

All the cells of a energy storage device 10, which are also to be referred to as a module, are supposed to have the same orientation, whether they are connected in series or in parallel. The contacting of a negative pole (second electrical terminal 16) is not carried out via the cup bottom 50 (Fig. 4, at the bottom side 22), but via the cup edge 52 at the cell head (at the head side 20). The cells are electrically connected via the cell head to a multi-layered circuit board 18 (PCB). The module is constructed to be very light, in a layered design with a foam material around the cell jackets and a double bottom as a cooling channel or temperature-regulating channel 28. In one embodiment, fins 24 are mounted on all cell bottoms.

Due to the basic conditions for using the energy storage device 10, such as the maximum voltage level, redundancies and line loads, one or several possible variants can be chosen. By means of a simulation program, a numerical simulation of the chosen variant or configuration can be carried out in the next step in order to check and, if necessary, adapt them.

For safety reasons, energy storage devices 10 are preferably built from individual modules whose voltage level does not exceed a safe touch voltage. Irrespective of whether the battery module can then be used with a high voltage in a series configuration or with active bus converter modules, their voltage level can be built from 12 serial cells. In the case of current Li-ion cells, this results in a maximum voltage of 12 x 4.2 volts = 50.4 volts. For this reason, the grouping into 12 is preferred in battery management systems (BMS).

Due to the power data of the selected battery cell and the requirements resulting from the application, for example, a cell assembly of 12 serial units (energy storage cell group 42, 44), of 22 cells connected in parallel, may be advantageous. In this case, the modules are designed in a configuration of 12s22p. In the present case, 14 modules are then required for the total power and energy. In this case, the number is independent on whether the modules are connected in series or, using the bus converters, in parallel. The final charging voltage is calculated to be 706 volts for the series connection of the modules (with or without a center tap as a reference) or at +/- 400 volts if the bus converter modules are used.

A total of 12 x 22 x 14 = 3696 cells is required. Given a cell weight of 44.5g (measurement) the total mass of the cells is 3696 x 0.0445kg = 164.5 kg.

For example, battery cells 12 by the manufacturer Samsung SDI of the type INR18650-25R can be used. 3696 cells are required for this configuration. Their total weight is ∼165kg. For the nominal discharge power of 55 kW, the mission duration of 30 minutes with a temperature increase of 12 K without cooling could be confirmed by measurements, as shown in Fig. 5. Overloading of up to three times the nominal load is possible.

In order to be able to design an electrical system with lines, motors, energy storage units and electronics to conform to the required currents, the voltage level as well as the structure of the network needs to be predetermined. Both a bipolar and a unipolar aircraft network are conceivable, with bipolar networks being preferred at first. In particular, the following configurations are conceivable:
Unipolar: 0V / 700V (battery modules in series connection)
Bipolar: +350V / 0V / -350V (battery modules in series with center tap)
Bipolar: +400V / 0V / -400V (battery modules with bus converter modules)

Bus converter modules can convert the voltages of individual energy storage cell group or even of the entire energy storage device to a system voltage that is required by the system in which the energy storage device is to be used. For example, the bus converter modules can be mounted on the circuit board 18 in order to achieve a compact build.

In the design selected, the use of the energy storage device 10 is possible until the cells 12 are fully discharged, without additionally cooling the cells 12. The thermal dissipation is absorbed by the heat capacity of the cells 12; the temperature of the cells 12 increases accordingly. A full discharge at nominal power is possible in this application in order to stay, at a given maximum starting temperature of 38°C with cooling and fully insulated, under the maximum admissible cell temperature. The heating-up of the cells is advantageous to a certain extent, because the internal direct current resistance and thus the losses are decreased at higher temperatures. The degree of efficiency, and thus the energy yield and the flight time, thus increase perceptibly. In order to come into the optimum operating temperature range of the cells as quickly as possible, it is advantageous if they retain their lost energy for as long as possible and heat themselves up. A thermal insulation of the cells aids this process.

In the worst credible case of failure of a cell, the so-called thermal runaway, large amounts of heat and mechanical energies are released. The triggering of this process is normally prevented by safety measures. They include protective mechanisms by the manufacturer inside the cell as well as ensuring the adherence to the admissible operating parameters of the cell by the battery management system and additional overcurrent protection devices for protection against overload. Nevertheless, the possibility of a runaway of a cell should be taken into account in the design. First, the failure always occurs first in an individual cell 12. Due to the exothermic reaction and the heat released thereby, other cells 12 can be affected in such a way that they also burn down. A fire including many cells 12 releases great amounts of thermal energy and fumes. A large-scale exothermic process could only be controllable by means of very massive housings and should be avoided by means of design measures for preventing a spread. If the prevention of the heat transfer from the heating cell 12 to the surrounding cells 12 is successful, the energy and the fumes stay limited to the quantity of one cell 12. The consequences that arise in this manner should be controllable in a light-weight design.

The battery cells are embedded in a body 30 consisting of a temperature-resistant, porous insulating material. Inorganic as well as organic foamed materials can be taken into consideration for this purpose. In this case, the insulating foam serves both as a supporting element as well as for the thermal insulation of the cells. Crucial factors regarding the material are in this case the bulk density, which has an effect on the light-weight structure, the fire resistance as well as the fire behavior, such as self-extinguishing properties. The choices include, for example, glass foam, high-temperature polyurethane foam, fiber boards based on calcium-magnesium silicate and ceramic fibers. The basic material is to be cut into blocks of the size of the module and drilled out with a corresponding hole pattern to form a body 30.

Usually, aluminum heat sinks are used in electronics. They are supposed to distribute the heat in the plane and then give it off to the air over a large surface area. In the present case, the heat distribution is unnecessary because the cells themselves are already distributed over the entire surface area, in accordance with the drilling pattern. Therefore, only an enlargement of the surface area of the cell bottoms is required; the material portion of a heat sink for heat distribution, which is quite substantial, can be omitted. It is intended to weld metal conductors as fins 24, as they are normally used for electrical contacting, to the cell bottom. The metal band can be bent into a U-shape and is only supposed to serve for the thermal connection of the cell to an air flow or other temperature-regulating fluid 26. The direct metal-to-metal contact between the cell bottom and metal fins 24, without any further interface materials, such as heat-conducting paste or silicon mats, ensures a low heat transport resistance. Because only a small metal strip for the fins 24 is required for realization, a very light-weight design is possible. Apart from cooling, the thermal path between the temperature-regulating fluid 26 (e.g. an air flow) and the battery cell 12 can also be used for pre-heating the cells 12 if an air flow warmer than the cell temperature is available. This option should also be taken into consideration in the integration of the battery.

In order to prove the suitability of the cooling concept, metal bands 24 were welded onto cells 12 for a corresponding test series. The cell 12 was thermally insulated so as to correspond to the intended application. The connection between the air flow speed, the cooling surface and the cooling capacity was determined. To this end, fins 24 of various lengths were used at different defined flow speeds at the cup bottom 50 while the decay curve of the cell temperature was recorded starting from 55°C. The heat transfer coefficient can be determined from this. It was found that sufficiently high cooling capacities were reached in the examined area in order to be able to adjust the cells 12 to a desired temperature, even during standard operation, under almost all conditions.

At present, the electrical contacting of the cells 12 constitutes a considerable manufacturing expenditure. Using metal bands or metal sheets, the cells are usually welded alternately and bilaterally to form corresponding module configurations. Connections of the cells to the BMS for measuring voltage or integrating and connecting temperature sensors have to be realized in a second step, with additional cables. The bilateral connection of the cells also limits the connection of a cooling system considerably. In contrast, in the present invention, use is made of established production methods from electronics. A circuit board 18 will be realized that permits unilateral cell contacting. This circuit board 18 taps the positive and the negative potential of the cells at the same time and is mounted above the cell head 52 (with the positive pole). Bore holes in the board are positioned so as to correspond to the cells 12. In them, tabs that have a corresponding current-carrying capacity are supposed to contact the central positive pole and the upper edge of the cell cup in each case. The routing of the current from the cell bottom over the cup causes additional losses in operation. However, this transmission path constitutes only a small additional resistance of approx. 1 mOhm in addition to the internal direct current resistance of the cell of approx. 25 mOhm. The advantages of the mass production of such circuit boards 18 with the option of incorporating other elements, such as BMS contacting and the integration of electronic components clearly prevail in this case. The balance of the additional outer resistance in relation to the smaller inner resistance at a higher temperature may possibly even be positive.

The battery modules or energy storage devices 10 are supposed to be assembled in a kind of stacked construction. In this case, the circuit board 18 with the entire electrical contacting forms the lid of the module. The insulating foam block with the cells forms the core of the module or the body 30, and an air channel or temperature-regulating channel 28 made of composite material forms the bottom element. All three elements are cost-effective to produce and have a low weight. The cooling system is configured to be separate from the electrical cell contacting. The BMS could also be realized on the connecting circuit board 18.

Cells can only be operated economically in a narrow temperature range of approx. 20°C to 40°C, and safely in a slightly broader range of approx. -10°C to 60°C; in addition, the losses through the inner resistance are directly dependent on the cell temperature. A detailed knowledge of the thermal behavior for modelling, for designing the model and the cooling system, and for BMS prognoses, is helpful.

In order to determine the temperature development depending on the losses, the specific and the absolute average heat capacity of the cell is determined. In the cells 12 used by way of example, the measurement result is 1179 J/kgK; this is several 100 J/kgK above the usual literature references. Further measurements confirm this value. This may possibly be ascribed to the fact that modern cells with a high capacity, like the one used, comprise other materials and a higher average material density than was known at the time the literature was written.

For module construction, the thermal conductivity of the cup bottom (anode) and of the positive pole (cathode) is determined by heating in an ideal sink. As was expected, the thermal conductivity via the anode is greater than via the cathode, in this case, twice as large. A temperature regulation via the cup bottom is preferred.

If several energy storage devices 10 are stacked one above the other, they can be disposed abutting against a joint temperature-regulating channel 28. In that case, the energy storage devices 10 can be orientated in such a way that the bottom sides 22 of the cells 12 of a first energy storage device 10 and the head sides 20 of the cells 12 of a second energy storage device are disposed at the joint temperature-regulating channel. If the cells 12 are configured in such a way that they release gas via their head side 20 in the case of failure, the released gases can advantageously be discharged via the temperature-regulating channel 28. Additional air conduits, which would increase the design complexity and possibly increase the weight of the energy storage device 10, are thus dispensable.

It is also possible to arrange energy storage cell groups 42, 44 within the energy storage apparatus 10 in such a way.

### List of Reference Numerals

- 10: Electrical energy storage device
- 12: Energy storage cell (cell)
- 14: First electrical terminal
- 16: Second electrical terminal
- 18: Circuit board
- 20: Head side
- 22: Bottom side
- 24: Fin (surface area enlarging device)
- 26: Temperature-regulating fluid
- 28: Temperature-regulating channel
- 30: Body
- 32: Opening
- 34: First conductor layer
- 36: Second conductor layer
- 38: Insulation layer
- 40: Via
- 42: First energy storage cell group
- 44: Second energy storage cell group
- 46: Line
- 48: Line
- 50: Cup bottom
- 52: Cell head
- 56: First energy storage cell group
- 58: Second energy storage cell group
- 60: Third energy storage cell group

## Claims

1. An electrical energy storage device (10) having a plurality of electrochemical energy storage cells (12) for collecting, supplying and storing electrical energy, each of which has a first electrical terminal (14) and a second electrical terminal (16), and a contacting device for contacting the first and second electrical terminals (14, 16) of the energy storage cells (12), wherein the contacting device has a multi-layered structure and has at least one insulation layer (38) and a conductor layer (34, 46), the energy storage cells (12) having a bottom side (22) for heat dissipation and a head side (20), wherein the first and second terminals (14, 16) can be contacted in the region of the head side (20), wherein the energy storage cells (12) are disposed in such a way that the bottom sides (22) are in each case disposed adjacent to bottom sides (22) of other energy storage cells (12), and the head sides (20) are in each case disposed adjacent to head sides (20) of other energy storage cells (12), wherein a temperature-regulating channel (28) for accommodating a temperature-regulating fluid (26) for heat removal and supply is disposed in the region of the bottom sides (22), **characterized by** a body (30) made of insulating foam for accommodating and positioning the energy storage cells (12), the body having openings (32) for accommodating the energy storage cells (12), wherein the insulating foam serves both as supporting element as well as for the thermal insulation of the energy storage cells (12).

2. The electrical energy storage device according to claim 1, **characterized in that** the energy storage cells (12) have a surface area enlarging device (24) for enlarging a contact surface between the energy storage cell (12) and a temperature-regulating fluid (26).

3. The electrical energy storage device according to claim 2, **characterized in that** the surface area enlarging device (24) is connected to the bottom side (22).

4. The electrical energy storage device according to any one of the preceding claims, **characterized in that** the contacting device has a circuit board (18) for unilaterally contacting the energy storage cells.

5. The electrical energy storage device according to claim 4, **characterized in that** the circuit board (18) has a first conductor layer (34) for connecting first terminals (14) of several energy storage cells (12) and a second conductor layer (36) for connecting second terminals (16) of the several energy storage cells (12) and an insulation layer (38) between the first and second conductor layers (34, 36).

6. The electrical energy storage device according to claim 5, **characterized in that** the insulation layer (38) of the circuit board (18) has at least one through hole each for at least one of the terminals (14, 16) of each energy storage cell (12) to be connected.

7. The electrical energy storage device according to any one of the preceding claims, **characterized in that** the plurality of energy storage cells (12) is disposed in an array with several rows and several lines.

8. The electrical energy storage device according to any one of the preceding claims, **characterized in that** several energy storage cells (12) are series-connected by means of the contacting device to form an energy storage cell group (42, 44), and that several energy storage cell groups (42, 44) are connected in parallel by means of the contacting device.

9. The electrical energy storage device according to any one of the preceding claims, **characterized in that** the temperature-regulating channel (28) is made of composite material and forms a bottom element of the electrical energy storage device (10).

10. A vehicle, in particular an aircraft, comprising an electromotive drive and at least one electrical energy storage device (10) according to any one of the preceding claims.

11. Method for manufacturing an electrical energy storage device according to any of the claims 1 to 9, comprising the steps of:
cutting an inorganic or organic foamed basic material into blocks of the size of the electrical energy storage device (10),
drilling out a hole pattern to form an insulating foam block (30) to form a core of the electrical storage device (10),
inserting energy storage cells (12) into the openings of the hole pattern,
providing a circuit board (18) with the entire electrical contacting to form a lid of the electrical storage device (10),
and providing a temperature-regulating channel (28) made of composite material to form a bottom element of the electrical storage device (10).

## Patentansprüche

1. Elektrische Energiespeichervorrichtung (10) mit einer Vielzahl von elektrochemischen Energiespeicherzellen (12) zum Sammeln, Liefern und Speichern von elektrischer Energie, von denen jede einen ersten elektrischen Anschluss (14) und einen zweiten elektrischen Anschluss (16) aufweist, und einer Kontaktierungsvorrichtung zum Kontaktieren des ersten und zweiten elektrischen Anschlusses (14, 16) der Energiespeicherzellen (12), wobei die Kontaktierungsvorrichtung einen mehrschichtigen Aufbau hat und mindestens eine Isolationsschicht (38) und eine Leiterschicht (34, 46) aufweist, wobei die Energiespeicherzellen (12) eine Unterseite (22) zur Wärmeableitung und eine Kopfseite (20) aufweisen, wobei der erste und der zweite Anschluss (14, 16) im Bereich der Kopfseite (20) kontaktierbar sind, wobei die Energiespeicherzellen (12) derart angeordnet sind, dass die Unterseiten (22) jeweils benachbart zu den Unterseiten (22) von anderen Energiespeicherzellen (12) angeordnet sind, und die Kopfseiten (20) jeweils angrenzend an die Kopfseiten (20) von anderen Energiespeicherzellen (12) angeordnet sind, wobei im Bereich der Unterseiten (22) ein temperaturregulierender Kanal (28) zur Aufnahme eines temperaturregulierenden Fluids (26) zur Wärmeableitung und Wärmezuleitung angeordnet ist,
**gekennzeichnet durch** einen Körper (30) aus Isolierschaum zur Aufnahme und Positionierung der Energiespeicherzellen (12), wobei der Körper Öffnungen (32) zur Aufnahme der Energiespeicherzellen (12) aufweist, wobei der Isolierschaum sowohl als Stützelement als auch zur Wärmeisolierung der Energiespeicherzellen (12) dient.

2. Elektrische Energiespeichervorrichtung nach Anspruch 1, **dadurch gekennzeichnet, dass** die Energiespeicherzellen (12) eine Oberflächenvergrößerungsvorrichtung (24) zum Vergrößern einer Kontaktfläche zwischen der Energiespeicherzelle (12) und einem temperaturregulierenden Fluid (26) aufweisen.

3. Elektrische Energiespeichervorrichtung nach Anspruch 2, **dadurch gekennzeichnet, dass** die Oberflächenvergrößerungsvorrichtung (24) mit der Unterseite (22) verbunden ist.

4. Elektrische Energiespeichervorrichtung nach einem der vorstehenden Ansprüche, **dadurch gekennzeichnet, dass** die Kontaktierungsvorrichtung eine Leiterplatte (18) zum einseitigen Kontaktieren der Energiespeicherzellen aufweist.

5. Elektrische Energiespeichervorrichtung nach Anspruch 4, **dadurch gekennzeichnet, dass** die Leiterplatte (18) eine erste Leiterschicht (34) zum Verbinden erster Anschlüsse (14) mehrerer Energiespeicherzellen (12) und eine zweite Leiterschicht (36) zum Verbinden zweiter Anschlüsse (16) der mehreren Energiespeicherzellen (12) und eine Isolierschicht (38) zwischen der ersten und der zweiten Leiterschicht (34, 36) aufweist.

6. Elektrische Energiespeichervorrichtung nach Anspruch 5, **dadurch gekennzeichnet, dass** die Isolierschicht (38) der Leiterplatte (18) jeweils mindestens ein Durchgangsloch für mindestens einen der Anschlüsse (14, 16) jeder anzuschließenden Energiespeicherzelle (12) aufweist.

7. Elektrische Energiespeichervorrichtung nach einem der vorhergehenden Ansprüche, **dadurch gekennzeichnet, dass** die mehrzähligen Energiespeicherzellen (12) in einem Feld mit mehreren Reihen und mehreren Zeilen angeordnet sind.

8. Elektrische Energiespeichervorrichtung nach einem der vorhergehenden Ansprüche, **dadurch gekennzeichnet, dass** mehrere Energiespeicherzellen (12) mittels der Kontaktierungsvorrichtung zu einer Energiespeicherzellgruppe (42, 44) in Reihe geschaltet sind und dass mehrere Energiespeicherzellgruppen (42, 44) mittels der Kontaktierungsvorrichtung parallelgeschaltet sind.

9. Elektrische Energiespeichervorrichtung nach einem der vorhergehenden Ansprüche, **dadurch gekennzeichnet, dass** der temperaturregulierende Kanal (28) aus Verbundwerkstoff hergestellt ist und ein unteres Element der elektrischen Energiespeichervorrichtung (10) bildet.

10. Fahrzeug, insbesondere Luftfahrzeug, umfassend einen elektromotorischen Antrieb und mindestens eine elektrische Energiespeichervorrichtung (10) nach einem der vorhergehenden Ansprüche.

11. Verfahren zur Herstellung einer elektrischen Energiespeichervorrichtung nach einem der Ansprüche 1 bis 9, umfassend die Schritte:
Schneiden eines anorganischen oder organischen geschäumten Grundmaterials in Blöcke der Größe der elektrischen Energiespeichervorrichtung (10),
Ausbohren eines Lochmusters, um einen isolierenden Schaumstoffblock (30) zu bilden, um einen Kern der elektrischen Speichervorrichtung (10) zu bilden,
Einsetzen von Energiespeicherzellen (12) in die Öffnungen des Lochmusters,
Bereitstellen einer Leiterplatte (18) mit der gesamten elektrischen Kontaktierung, um einen Deckel der elektrischen Speichervorrichtung (10) zu bilden,
und Bereitstellen eines temperaturregulierenden Kanals (28) aus Verbundmaterial zum Bilden eines unteren Elements der elektrischen Speichervorrichtung (10).

## Revendications

1. Dispositif de stockage d'énergie électrique (10) comportant une pluralité de cellules de stockage d'énergie électrochimique (12) pour collecter, fournir et stocker de l'énergie électrique, dont chacune comporte une première borne électrique (14) et une seconde borne électrique (16), et un dispositif de contact pour contacter les première et seconde bornes électriques (14, 16) des cellules de stockage d'énergie (12), dans lequel le dispositif de mise en contact présente une structure multicouche et présente au moins une couche isolante (38) et une couche conductrice (34, 46), les cellules de stockage d'énergie (12) présentant un côté inférieur (22) pour la dissipation thermique et un côté tête (20), les première et deuxième bornes (14, 16) pouvant être mises en contact dans la zone du côté tête (20), les cellules de stockage d'énergie (12) étant disposées de telle sorte que les côtés inférieurs (22) sont respectivement disposés de manière adjacente aux côtés inférieurs (22) des autres cellules de stockage d'énergie (12), et les côtés tête (20) sont respectivement disposés à côté des côtés tête (20) d'autres cellules de stockage d'énergie (12), un canal de régulation de température (28) destiné à recevoir un fluide régulateur de température (26) destiné à évacuer et fournir de la chaleur étant disposé dans la zone des côtés inférieurs (22),
**caractérisé par** un corps (30) en mousse isolante pour recevoir et positionner les cellules de stockage d'énergie (12), le corps présentant des ouvertures (32) pour recevoir les cellules de stockage d'énergie (12), la mousse isolante servant à la fois d'élément de support et d'isolant thermique des cellules de stockage d'énergie (12).

2. Dispositif de stockage d'énergie électrique selon la revendication 1, **caractérisé en ce que** les cellules de stockage d'énergie (12) présentent un dispositif d'agrandissement de surface (24) pour élargir une surface de contact entre la cellule de stockage d'énergie (12) et un fluide régulateur de température (26).

3. Dispositif de stockage d'énergie électrique selon la revendication 2, **caractérisé en ce que** le dispositif d'agrandissement de surface (24) est relié au côté inférieur (22).

4. Dispositif de stockage d'énergie électrique selon l'une quelconque des revendications précédentes, **caractérisé en ce que** le dispositif de mise en contact comporte une carte de circuit imprimé (18) pour mettre unilatéralement en contact les cellules de stockage d'énergie.

5. Dispositif de stockage d'énergie électrique selon la revendication 4, **caractérisé en ce que** la carte de circuit imprimé (18) présente une première couche conductrice (34) pour connecter des premières bornes (14) de plusieurs cellules de stockage d'énergie (12) et une seconde couche conductrice (36) pour connecter des secondes bornes (16) des différentes cellules de stockage d'énergie (12) et une couche isolante (38) entre les première et seconde couches conductrices (34, 36).

6. Dispositif de stockage d'énergie électrique selon la revendication 5, **caractérisé en ce que** la couche isolante (38) de la carte de circuit imprimé (18) présente au moins un trou traversant pour au moins une des bornes (14, 16) de chaque cellule de stockage d'énergie (12) à connecter.

7. Dispositif de stockage d'énergie électrique selon l'une quelconque des revendications précédentes, **caractérisé en ce que** la pluralité de cellules de stockage d'énergie (12) est disposée en un réseau avec plusieurs rangées et plusieurs lignes.

8. Dispositif de stockage d'énergie électrique selon l'une quelconque des revendications précédentes, **caractérisé en ce que** plusieurs cellules de stockage d'énergie (12) sont reliées en série au moyen du dispositif de contact pour former un groupe de cellules de stockage d'énergie (42, 44) et **en ce que** plusieurs groupes de cellules de stockage d'énergie (42, 44) sont reliés en parallèle au moyen du dispositif de mise en contact.

9. Dispositif de stockage d'énergie électrique selon l'une quelconque des revendications précédentes, **caractérisé en ce que** le canal de régulation de température (28) est en matériau composite et constitue un élément inférieur du dispositif de stockage d'énergie électrique (10).

10. Véhicule, en particulier avion, comprenant un entraînement à moteur électrique et au moins un dispositif de stockage d'énergie électrique (10) selon l'une quelconque des revendications précédentes.

11. Procédé de fabrication d'un dispositif de stockage d'énergie électrique selon l'une quelconque des revendications 1 à 9, comprenant les étapes consistant à :
découper d'un matériau de base en mousse inorganique ou organique en blocs de la taille du dispositif de stockage de l'énergie électrique (10),
reforer un motif de trous pour former un bloc de mousse isolante (30) pour former un noyau du dispositif de stockage électrique (10),
insérer de cellules de stockage d'énergie (12) dans les ouvertures du motif de trous,
fournir une carte de circuit imprimé (18) avec l'ensemble du contact électrique pour former un couvercle du dispositif de stockage électrique (10),
et fournir un canal de régulation de température (28) en matériau composite pour former un élément inférieur du dispositif de stockage électrique (10).
